Europäisches Patentamt

European Patent Office

Office européen des brevets

(19)

(11) Numéro de publication: **0 494 014 B1**

(12) **FASCICULE DE BREVET EUROPEEN**

(45) Date de publication de fascicule du brevet: **28.06.95**   (51) Int. Cl.⁶: **B65G 1/137**

(21) Numéro de dépôt: **91403514.2**

(22) Date de dépôt: **20.12.91**

(54) **Préparation de listes d'objets à charger dans des contenants.**

(30) Priorité: **28.12.90 FR 9016490**

(43) Date de publication de la demande:
**08.07.92 Bulletin  92/28**

(45) Mention de la délivrance du brevet:
**28.06.95 Bulletin  95/26**

(84) Etats contractants désignés:
**BE CH DE ES FR GB LI LU NL**

(56) Documents cités:
**DE-U- 8 618 894**
**DE-U- 8 625 530**
**FR-A- 2 631 721**
**US-A- 3 908 800**
**US-A- 4 088 237**

**PATENT ABSTRACTS OF JAPAN vol. 10, no.
142 (M-481)(2199) 24 Mai 1986**

**PATENT ABSTRACTS OF JAPAN vol. 6, no.
240 (M-174)(1118) 27 Novembre 1982**

(73) Titulaire: **LOGARITHME S.A.
11, rue de la République
F-42000 Saint-Etienne (FR)**

Titulaire: **SAVOYE N.S.A.
BP 6
F-21550 Ladoix Serrigny (FR)**

(72) Inventeur: **Ledoux, Chantal
26 Chemin de Mandrin,
Semène
F-43110 Aurec (FR)**
Inventeur: **Testa, Dominique
16 rue Albert Poylo
F-42000 Saint-Etienne (FR)**

(74) Mandataire: **Martinet & Lapoux
BP 405
F-78055 St. Ouentin en Yvelines Cédex (FR)**

Rank Xerox (UK) Business Services
(3. 10/3.0 9/3.3.3)

## Description

La présente invention concerne la préparation au moins partiellement automatisée de listes d'objets à charger chacune dans des contenants prédéterminés. En particulier, la préparation a trait à la confection de colis d'objets divers à expédier, ou à la réunion d'objets d'outillage pour alimenter des ateliers de traitement ou de montage ou d'assemblage.

Dans la plupart de sites de préparation de liste d'objets connus, un convoyeur principal transporte les contenants, tels que bacs ou caisses en carton, vers différents postes de stockage d'objets où sont chargés les contenants. A chaque poste, un préparateur retire du convoyeur les contenants qui lui sont destinés, ou des moyens automatiques d'aiguillage et de lecture de code détectent un code sur les contenants qui sont destinés au poste et transfèrent ces contenants détectés vers une zone de réception de contenants en attente de chargement.

A chaque contenant en attente correspond une liste d'objets à prélever dans un casier du poste. Cette liste est par exemple un bordereau porté par le contenant et se présente sous la forme d'un tableau qui soit être lu par le préparateur. Ainsi en correspondance à chaque objet sont indiqués dans le tableau la désignation de l'objet ou un code alphanumérique déterminé, la case où des objets identiques sont à prélever, et la quantité d'objets à prélever dans la case.

La lecture d'une ligne du tableau induit bien souvent de fréquentes erreurs, telles que l'attribution d'une case ou d'une quantité d'objets à la désignation d'un objet se trouvant sur une ligne voisine dans le tableau. En outre, la recherche de la ligne dans le tableau et la lecture de celle-ci sont répétées pour un objet à prélever en grande quantité, ce qui affecte notablement la durée de confection d'une liste d'objets.

Le prélèvement d'une quantité d'objet, notamment élevée, engendre un comptage fastidieux des objets par le préparateur. Le nombre d'objets prélevés est fréquemment erroné ce qui génère des réclamations des destinataires des contenants. En outre, un tel prélèvement d'objets d'une case et la pose de ceux-ci dans un contenant sont réalisés par groupes ; ceci oblige le préparateur à repérer chaque fois la case sélectionnée, et provoque des prélèvements indésirables dans des cases voisines à la case sélectionnée.

Les modèles d'utilité allemands DE-U-8 618 894 et DE-U-8 625 530 remédient partiellement aux inconvénients des préparations évoquées ci-dessus en prévoyant des moyens de contrôle d'objets qui assistent le préparateur dans la confection de sa liste d'objets et qui sont déplaçables devant un moyen de stockage d'objets, tel que casier ou rayonnage.

Le DE-U-8 618 894 décrit et illustre d'une manière bien souvent imprécise une installation de préparation de commande d'objets, dits articles.

Cette installation comprend un casier à cases du type tiroir devant la face duquel une table de contrôle est déplaçable par des moyens d'entraînement non décrit. La table est destinée à recevoir un contenant d'articles, tel que emballage en carton, et supporte un terminal amovible muni d'un clavier, d'un écran, d'un crayon pour code-à-barres -dont le rôle n'est pas indiqué-, d'une imprimante et de moyens émetteurs-récepteurs infrarouges. Les moyens émetteurs-récepteurs sont reliés à travers une balise-relais disposée à un coin du casier et une liaison sans fil du type infrarouge à un ordinateur de gestion de magasin.

Selon ce premier modèle d'utilité, il est également prévu un dispositif de comptage ou de pesage (non représenté) supporté par la table et transmettant ses valeurs de mesure à l'ordinateur à travers le terminal.

Le fonctionnement de l'installation selon le DE-U-8 618 894 apparaît être le suivant, compte tenu de l'insuffisance de description de l'installation :

L'ordinateur transmet au terminal des informations, telles que la quantité des articles à prélever dans le casier. La table est automatiquement positionnée devant chacune des rangées, telles que colonnes de cases, où des articles sont à prélever, sous la commande de l'ordinateur. L'écran donne d'autres informations non précisées.

A la fin d'une opération de prélèvement, le dispositif de pesage ou de comptage retransmet ses mesures au calculateur afin que le nombre d'articles nécessaires soit réellement inséré dans le contenant. Si ce n'est pas le cas, ceci est signalé optiquement ou acoustiquement par le terminal à l'opérateur via la transmission infrarouge 12. Une fiche ou étiquette peut être produite par l'imprimante. Le contenant plein 14 est ensuite déposé sur un convoyeur.

Le "dispositif de transport" selon le DE-U-8 625 530 comprend deux rangées de quatre contenants respectivement disposés sur des dispositifs de pesage et associés à des dispositifs de contrôle optique, tels que caméra vidéo, pour contrôler les objets déposés dans chacun des contenants.

Les dispositifs de pesage, les dispositifs de contrôle, ainsi qu'un clavier et un dispositif de reconnaissance de parole destinés à modifier et/ou compléter des données, un haut-parleur et un écran destinés à informer l'opérateur sur les articles à prélever, emplacements des objets dans les casiers et nombre des objets, et des voyants pour signaler le contenant où les articles prélevés sont à poser, sont reliés à un calculateur également supporté par le dispositif de transport. Le moteur du dispositif de transport est commandé par le calculateur afin que le dispositif de transport roule dans la travée entre deux casiers ou rayonnage et s'arrête automatiquement en face d'objets à prélever sur des étagères. Le moteur est alimenté à travers un rail de guidage en partie haute de la travée.

Chaque dispositif de pesage délivre au calculateur, ou bien le calculateur élabore, la différence entre une valeur nominale et une valeur réelle de la masse du contenant. Puisque seulement cette unique différence est établie et qu'aucun signalement d'erreur n'est prévu, ce contrôle de poids est réalisé à la fin du prélèvement de tous les objets posés dans un contenant. Puis le contenant ainsi rempli est posé sur un convoyeur muni d'un bon de commande, empaqueté et aiguillé vers des gares pour clients.

Les moyens de contrôle d'objets selon les DE-U-8 618 894 et DE-U-8 625 530 présentent ainsi des inconvénients analogues, n'assistent que partiellement le préparateur, et n'évitent pas certaines erreurs dans la préparation d'une commande d'articles :

1) Aucune liste d'objets à prélever dans plusieurs postes de chargement successifs ne peut être établie.

En d'autres termes, un contenant ne peut être rempli que par des objets provenant d'un même casier ou rayonnage puisqu'aucune information n'associe un contenant prédéterminé avec une liste d'objets. Ceci est également corroboré par la procédure de pesage au cours de laquelle,

selon le DE-U-8 618 894, le poids global (ou le nombre) des objets à peser dans un contenant est seulement mesuré par le dispositif de pesage et vérifié par le calculateur de gestion et non le poids de chacun des objets,

ou selon le DE-U-8 625 530, la différence entre la valeur de la masse réelle du contenant les objets et la valeur nominale de la masse du contenant, c'est-à-dire la masse du contenant vide d'objet, et communiquée par un dispositif de pesage au calculateur.

2) La mémorisation des données et le traitement de celles-ci sont effectués dans l'ordinateur ou calculateur, et celui-ci peut transmettre un signal d'erreur lorsque le nombre d'objets prélevés n'est pas suffisant, et donc à la fin de la préparation de la commande; de même, le déplacement des moyens de contrôle est commandé par l'ordinateur. Ceci exige une réservation de voie de transmission pendant toute la durée de l'opération de prélèvement pour communiquer la masse instantanée du contenant à l'ordinateur.

3) La vérification du pesage concerne uniquement l'ensemble des objets prélevés à la fin de la préparation de la commande, et non objet par objet ou lot par lot puisque le dispositif de passage (ou de comptage) transmet des informations seulement à la fin du prélèvement effectué à une position donnée de la table. Par exemple, des erreurs dues particulièrement à des objets involontairement prélevé et de poids égaux à des objets destinés à la commande ne sont pas ainsi signalées.

Ainsi, si le nombre et l'emplacement des objets à insérer dans un contenant peuvent être signalés à l'opérateur selon le DE-U-8 625 530, l'évaluation de l'écart entre la masse du contenant vide avec la masse réelle du contenant avec les articles implique, comme selon le DE-U-8 618 894 une unique vérification de la masse du contenant plein, prêt à être empaqueté et étiqueté, après la pose de l'ensemble des objets dans le contenant.

L'invention vise à pallier les inconvénient des préparations de listes d'objets selon la technique antérieure ci-dessus évoquée, et plus particulièrement à éviter des erreurs lors du prélèvement d'objets destinés à un même contenant et appartenant à une liste dont les objets sont à prélever dans un ou plusieurs moyens de stockage distincts et distants, et surtout lors du prélèvement de chacun des objets de la liste, à l'unité ou par le lot, que le contenant soit vide ou partiellement rempli.

A cette fin, un procédé de préparation de listes d'objets à charger dans des contenants, selon lequel les objets sont prélevés par quantités prédéterminées dans des cases de plusieurs moyens de stockage d'objet respectivement, et ladite préparation relative à l'un des moyens de stockage est assistée par des moyens de contrôle d'objets déplaçables devant le moyen de stockage,

lesdits moyens de contrôle comprenant une unité de traitement centrale de données pour traiter et mémoriser des données, un dispositif de pesage relié à l'unité de traitement ayant un plateau-peseur pour poser un contenant, et des moyens interactifs relié à l'unité de traitement pour dialoguer avec un moyen de prélèvement d'objet et signaler des données d'objet,

est caractérisé par les étapes suivantes pour charger un contenant en attente devant l'un des moyens de stockage :

a) lecture d'un code de liste porté par un contenant déterminé par lesdits moyens mobiles de contrôle d'objets, ledit code de liste étant relatif à une liste d'objets qui sont au moins en partie à prélever dans ledit moyen de stockage et, en réponse à la lecture du code de liste, mémorisation de données dans l'unité de traitement pour chacune des quantités d'objets de la liste à prélever dans le moyen de stockage, lesdites données d'objets étant relatives à la masse de la quantité d'objets, à l'emplacement de la case dans ledit moyen de stockage où est stockée la quantité d'objets, et à la quantité d'objets à prélever dans la case;

b) pesage du contenant par le dispositif de pesage et mémorisation de la masse du contenant dans l'unité de traitement, et

c) traitement successifs des quantités d'objets de la liste à prélever dans ledit moyen de stockage, le traitement d'une quantité d'objets comprenant :

c1) signalement de l'emplacement de la case où la quantité est à prélever, par les moyens interactifs et déplacement des moyens de contrôle sensiblement à proximité de la case signalée,

c2) prélèvement de la quantité d'objets dans la case signalée, et

c3) pose de la quantité d'objets prélevée dans le contenant et pesage du contenant ainsi chargé par le dispositif de pesage afin que l'unité de traitement traite la quantité d'objets suivante dans la liste lorsque la différence entre la masse du contenant chargée et la masse mémorisée du contenant avant la pose de la quantité d'objets prélevée est sensiblement égale à la masse de la quantité mémorisée.

Selon l'invention, les données relatives à une quantité d'objets de la liste apparaissent sur un écran des moyens interactifs de dialogue entre le préparateur et l'unité de traitement des données de la liste, ce qui écarte tout risque d'erreur d'identification d'objet. L'expérience montre que le gain de temps de travail est divisé sensiblement par deux comparativement à une liste d'objets sur support papier.

Ainsi, à l'étape a, des données partielles d'une liste d'objets à charger dans un contenant se trouvant à un poste de chargement, c'est-à-dire les données relatives à l'une des quantités d'objets de la liste à prélever du moyen de stockage, tel que casier, du poste sont mémorisées en réponse à la lecture du code de liste sur le contenant.

A l'étape b, le pesage du contenant avant une quelconque pose d'objets prélevés est effectué par le dispositif de pesage. Le pesage du contenant à l'étape b selon l'invention permet d'utiliser des contenants différents et particulièrement des contenants remplis différemment, vides ou partiellement, avant la pose des objets à prélever dans le moyen de stockage en question.

L'étape c concerne les traitements successifs des quantités d'objets de la liste, c'est à dire pour chacune des quantités, un ou plusieurs mêmes objets ou articles, la réalisation des trois sous-étapes c1, c2, c3. Comme on le verra par la suite, chacune des quantités d'objets séparées est vérifiée au fur et à mesure des prélèvement, objet par objet à l'unité, ou lot par lot.

Au cours de la sous-étape c3, la masse M du contenant est comparée à la somme M + MO'' des masses de la quantité d'objets venant d'être prélevées et du contenant partiellement rempli, la masse M initiale pouvant correspondre à un contenant vide ou partiellement rempli avant d'entrer dans le poste de chargement relatif au moyen de stockage en question, ou à un contenant ayant été déjà rempli en partie au poste de chargement, et la comparaison précédente pouvant être suivie d'autres comparaisons de masse analogues lors de prélèvements ultérieurs d'autres quantités d'articles effectués au poste de chargement et/ou à des postes de chargement suivants.

Les moyens de contrôle supportent le contenant à charger et sont déplaçables à proximité de la case dont l'emplacement est visualisé sur l'écran. La fatigue du préparateur est ainsi réduite, et les erreurs de prélèvements d'objets entre cases voisines sont pratiquement nulles, d'autant plus que les moyens de contrôle peuvent, selon l'invention, être positionnés automatiquement à proximité d'un case sélectionnée, ou la position sélectionnée des moyens de contrôle peut être vérifiée automatiquement.

Le pesage de la quantité des objets prélevés dans une case directement à partir du conteneur chargé de ces objets réduit les manipulations et surtout permet de charger exactement la quantité d'objets signalée.

Selon d'autres caractéristiques du procédé, les objets d'une quantité déterminée à prélever ont leur masse vérifiée une par une, ou en lot par les moyens de contrôle.

Pour un prélèvement à l'unité, les moyens interactifs signalent un invitation de prélèvement à l'unité pour au moins une quantité d'objets à prélever dans le moyen de stockage dont le traitement est décomposé en des traitements des objets successifs comprenant chacun :

c2) prélèvement d'un objet dans la case signalée, et

c3) pose de l'objet prélevé dans le contenant et pesage du contenant ainsi chargé par le dispositif de pesage afin que l'unité de traitement traite l'objet suivant dans la quantité lorsque la différence entre la masse du contenant chargé et la masse mémorisée du contenant avant la pose de l'objet est sensiblement égale à la masse de l'objet mémorisée.

Les moyens de contrôle effectuent également une vérification de la désignation des objets à prélever, lorsque ceux-ci portent un code d'objet, par exemple un code-a-barres. Ainsi dans ce cas, les objets sont contrôlés à 100 % en référence et quantité. Le procédé comprend alors, entre le prélèvement et la pose d'un objet, la lecture d'un code d'objet porté par l'objet par les moyens de contrôle afin d'autoriser la pose de l'objet prélevé dans le contenant lorsque les codes d'objet mémorisé et lu sont identiques.

Lorsque les moyens interactifs signalent une invitation de prélèvement d'objets par lot, pour au moins une quantité d'objets à prélever dans le moyen de stockage, la lecture du code d'objet est effectuée sur au moins l'un des objets du lot afin d'autoriser la pose du lot d'objets prélevé dans le contenant lorsque le code d'objet lu est identique à un code d'objet inclus dans les données d'objet mémorisées. De préférence, lors du pesage du contenant chargé, les moyens interactifs signalent une inégalité entre ladite différence de masses et la masse de la quantité mémorisée afin d'ôter ou d'ajouter des objets dans le contenant. Le signe de ladite inégalité peut être explicitement signalé par les moyens interactifs afin d'indiquer explicitement au préparateur une opération de retrait ou d'addition d'objets.

Ainsi, quelle que soit l'une des deux variantes de prélèvement ci-dessus, le contrôle des objets est exhaustif aussi bien au regard des masse des objets que la désignation des objets.

L'invention prévoit avantageusement d'optimiser le cheminement des moyen de contrôle devant le moyen de stockage pour la préparation de chaque liste d'objets, et corollairement améliore le confort du préparateur. A cette fin, en réponse à la lecture d'un code de liste sur un contenant, l'unité de traitement classe les objets de la liste en fonction des emplacements de case mémorisés, afin de déterminer un parcours minimal des moyens de contrôle pour qu'ils soient positionnés successivement à proximité des cases dont les emplacements sont mémorisés.

De préférence, un déplacement des moyens de contrôle pendant la préparation de la liste est bidirectionnel et pas-à-pas. Chaque pas est sensiblement égal à la distance entre deux cases adjacentes du moyen de stockage suivant la direction de déplacement.

Le procédé selon l'invention peut comprendre une interrogation de moyens informatiques superviseurs par l'unité de traitement des moyens de contrôle en réponse à la lecture du code de liste, et une transmission des données desdits objets dans la liste qui sont à prélever dans ledit moyen de stockage, par les moyens informatiques en réponse à l'interrogation pour mémorisation dans l'unité de traitement. Les données sont échangées entre l'unité de traitement et les moyens informatiques avant et après l'ensemble des prélèvements et chargements d'objets relatifs au contenant à un poste de chargement afin de libérer les moyens informatiques pour d'autres postes de chargement. Les données de listes et d'objets sont ainsi centralisées dans des moyens informatiques superviseurs à ordinateur central qui sont interrogés par les moyens de contrôle dans chacun des postes.

De préférence, la liaison entre les moyens de contrôle et les moyens superviseurs est une liaison sans fil, par exemple une liaison infrarouge. Une telle liaison évite tout câblage et autorise plus aisément des modifications de l'implantation des postes.

L'invention concerne également des moyens mobiles de contrôle d'objets pour la mise en oeuvre du procédé défini ci-dessus. Les moyens de contrôle se présentent sous la forme d'une tablette comportant, outre l'unité de traitement centrale de données, le dispositif de pesage et les moyens interactifs, également un premier lecteur électronique relié à l'unité de traitement pour lire le code de liste porté par un contenant.

D'autres caractéristiques des moyens de contrôle sont énoncées dans les revendications 20 à 25.

D'autres avantages de l'invention apparaîtront plus clairement à la lecture de la description suivante de plusieurs réalisations préférées de l'invention, en référence aux dessins annexés correspondants dans lesquels :

- la fig. 1 est une vue schématique de dessus d'une gare à plusieurs postes de préparation d'ensembles d'objets installés le long d'un convoyeur principal de contenants ;
- les figs. 2, 3 et 4 sont des vues schématiques en perspective, de droite et de face d'une tablette de contrôle d'objets le long d'un convoyeur secondaire dans un poste de chargement, respectivement ; et
- la fig. 5 est un algorithme d'un cycle de préparation d'une liste d'objets pour charger un contenant mis en oeuvre dans un poste de chargement.

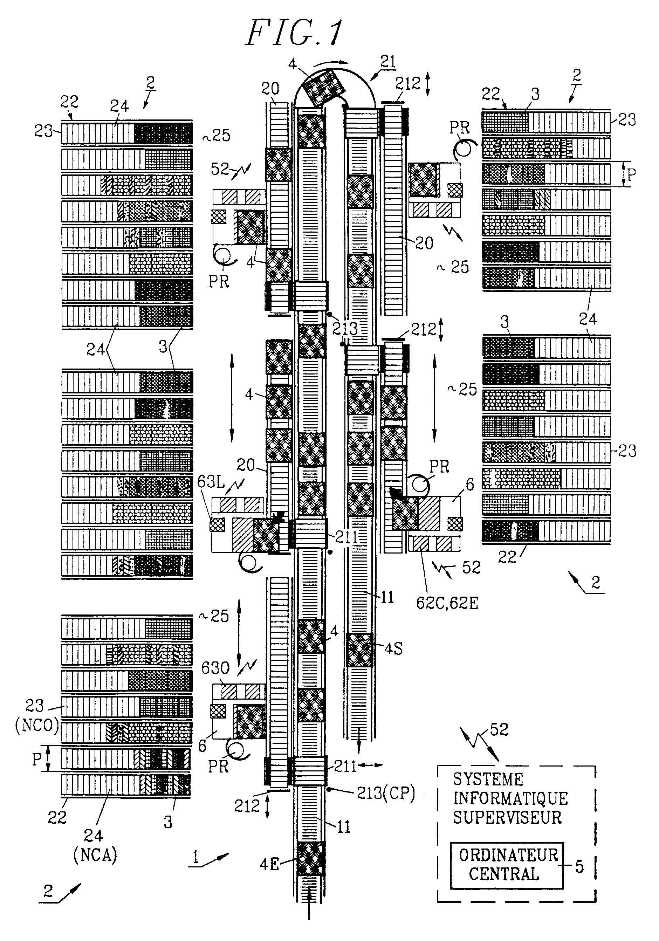

En référence à la fig. 1, une gare de préparation d'ensembles d'objets 1 comprend plusieurs postes de chargement 2 où des objets 3 sont sélectionnés et chargé dans des contenants 4. Les postes 2 sont répartis le long d'un convoyeur principal 11. Des contenants, tels que le contenant entrant 4E, vides d'objets ou partiellement remplis d'objets ayant été posés dans une gare en amont de la gare 1, sont acheminés par le convoyeur 11 vers la gare 1. Après dépose d'objets dans chacun des contenants, respectivement à un ou plusieurs postes 2 dans la gare 1, et traversée de la gare 1, les contenants remplis partiellement ou totalement sont acheminés par le convoyeur 11 vers une autre gare en aval, ou vers un poste de stockage et/ou d'expédition de contenants.

Un ensemble d'objets peut constituer une commande d'objets réalisée dans un entrepôt de stockage et d'expédition. Les objets sont par exemple des livres, des boîtes, des flacons, des sachets ou autres conditionnements par exemple pour produits alimentaires ou pharmaceutiques ou pour cosmétiques. Selon une autre application, un ensemble d'objets peut être destiné à l'alimentation d'un atelier de traitement ou de montage et concerné par exemple de l'outillage, ou des éléments composants d'appareils.

Un objet 3 est défini selon l'invention par trois données principales qui sont l'emplacement (NCO, NCA) de l'objet où il est stocké dans la gare, la masse MO de l'objet et de préférence un premier code C01 identifiant l'objet. A ces trois données sont ajoutées optionnellement la désignation DEO de l'objet et un second code CO2 indiquant des informations suplémentaires de l'objet.

Ces cinq données sont préenregistrées et gérées dans un ordinateur central 5 inclus dans un système informatique superviseur et relié bidirectionnellement aux poste de chargement 2. Les communications entre les postes 2 et l'ordinateur 5 sont établies et libérées suivant un protocole de transmission de messages connus. La liaison de transmission de messages et données 52 entre l'ordinateur 5 et les postes 2 est adaptée aux contraintes des implantations des postes dans la gare 1 et des diverses gares de préparation. De préférence, la liaison 52 est une liaison sans fil par infrarouge à laquelle on se référera dans la suite, ou une liaison par radiofréquence, le cas échéant à travers des balises-relais convenablement implantées, par exemple en entrée-sortie des allées de gare traversées par le convoyeur principal 11. Ce type de liaison est préféré à une liaison par câble électriques ou à fibres optiques afin d'autoriser aisément des aménagement et des déménagements des gares et/ou des postes.

Les codes CO1 et CO2 d'un objet 3 sont inscrit sur l'objet ou sur une étiquette collée sur celui-ci. Par exemple, ces codes sont des codes-à-barres auxquels on se référera dans la suite, bien que d'autres codes connus, tels que le code OCR peuvent être choisis. Les lecteurs de code dans les postes de chargement sont choisis en fonction des codes.

Le premier code CO1 d'un objet traduit sous forme codée la désignation DEO de l'objet, et permet de vérifier qu'il est à prélever dans un poste de chargement. Le second code CO2 traduit sous forme codée un numéro de série et/ou un numéro de lot et/ou une classe d'objet à laquelle appartient l'objet et est à transmettre par le poste de chargement où est prélevé l'objet vers l'ordinateur central 5 pour une gestion ultérieure des objets, par exemple en vue de leur approvisionnement et/ou à des fins statistiques et/ou à des fins de contrôle de fourniture d'objets, par exemple lorsque ceux-ci sont des produits pharmaceutiques.

Certains objets 3 sont démunis de codes lisible par lecteur électronique, et ne sont donc contrôlés que par rapport à leur masse, comme on le verra dans la suite.

Un contenant 4 peut être un bac, un caisse ou une barquette en carton, ou tout autre réceptacle ouvert. Lorsque les contenants sont à expédier, ceux-ci peuvent être munis de feuilles thermorétractables déposées dans un poste de formage de contenant situé en amont de la gare 1, et thermorétractées par dessus les objets dans un poste de thermorétraction de feuilles et de fermeture de contenant situé en aval de la gare 1. Les feuilles thermorétractées maintiennent sous forme compacte les objets contre le fond des contenants.

Sur l'une des parois d'un contenant 4, par exemple une paroi verticale sont apposés directement ou sur une étiquette un code de poste CP et un code de liste d'objets CL. Ces deux codes sont par exemple du même type que ceux portés par un objet, soit ici des codes-à-barres. Le code CP identifie le ou les postes de chargement destinataires où des objets sont à prélever pour charger le contenant 4. Le code CL identifie la liste des objets à charger dans le contenant, le détail de cette liste étant transmis partiellement ou totalement par l'ordinateur 5 à un poste destinataire, selon qu'une partie ou la totalité de la liste des objets sont à charger dans le contenant au poste en question.

Un poste de chargement 2 selon l'invention comprend essentiellement des moyens 20/21 pour transférer des contenant 4 du convoyeur principal 11 vers le poste 2, un moyen de stockage 22 pour stocker des objets 3 avec lesquels un préparateur PR charge manuellement des contenants en attente dans le poste 2, et des moyens mobiles de contrôle 6 assistant le préparateur pour contrôler les objets prélevés dans les moyens de stockage et posés dans des contenants.

Les moyens pour transférer selon la réalisation illustrée à la fig.1 comportent un petit convoyeur secondaire 20, par exemple à rouleaux et non motorisé, et un aiguilleur de contenant 21. Le convoyeur 20 est installé parallèlement le long d'un côté du convoyeur principal et, de préférence sensiblement au même niveau que le convoyeur principal afin qu'au début d'un cycle de préparation de liste, un contenant 4 soit transféré par l'aiguilleur 21 du convoyeur principale 11 vers le convoyeur secondaire 20 et en fin du cycle, soit transféré manuellement par le préparateur PR du convoyeur secondaire 20 vers le convoyeur principal 11 par glissement et/ou sensible gravité.

L'aiguilleur 21 est d'un type connu et peut comprendre un premier poussoir 211 pour pousser un contenant entrant 4E perpendiculairement à l'axe longitudinal du convoyeur 11 vers une extrémité amont du convoyeur secondaire 20. Le cas échéant lorsque le convoyeur 20 n'est pas motorisé, un second poussoir 212 est prévu pour pousser un contenant entrant de ladite extrémité amont vers un buttoir aval du convoyeur 20 afin de dégager l'extrémité amont. Selon une autre variante, le poussoir 211 peut être remplacé par des roues rotatives et orientables, au niveau de la surface porteuse du convoyeur 11 ou par un volet pivotant.

L'actionnement successif des poussoirs 211 et 212 est commandé en réponse à la lecture du code CP sur un contenant entrant 4E par au moins un lecteur électronique 213 situé en amont du poussoir 211, le long du convoyeur 11.

Le moyen de stockage dans le poste de chargement est constitué par un casier 22 comportant des colonnes 23 de cases 24. Les colonnes sont disposées côte à côte horizontalement, ou verticalement, ou sensiblement inclinées. Le casier 22 est disposé parallèlement au convoyeur secondaire 20 de manière à ménager une allée 25 pour le déplacement des moyens de contrôle 6 et du préparateur PR. Une case 24 contient des objets identiques. L'affectation des cases aux objets est gérée par l'ordinateur central 5, et ce dernier connaît en permanence la répartition des objets dans le casier. De préférence, deux cases 24 dans une même colonne de casier 23 contiennent des objets de masses différentes afin d'éviter que le préparateur prélève par erreur un objet ayant une masse égale à celle d'un objet à prélever indiqué par les moyens de contrôle lorsque ceux-ci sont arrêtés à proximité de ladite colonne, comme on le verra dans la suite. Certaines colonnes 23 dans un casier 22 ne contiennent chacune qu'une case, par exemple longue et sensiblement inclinée vers l'allée 25.

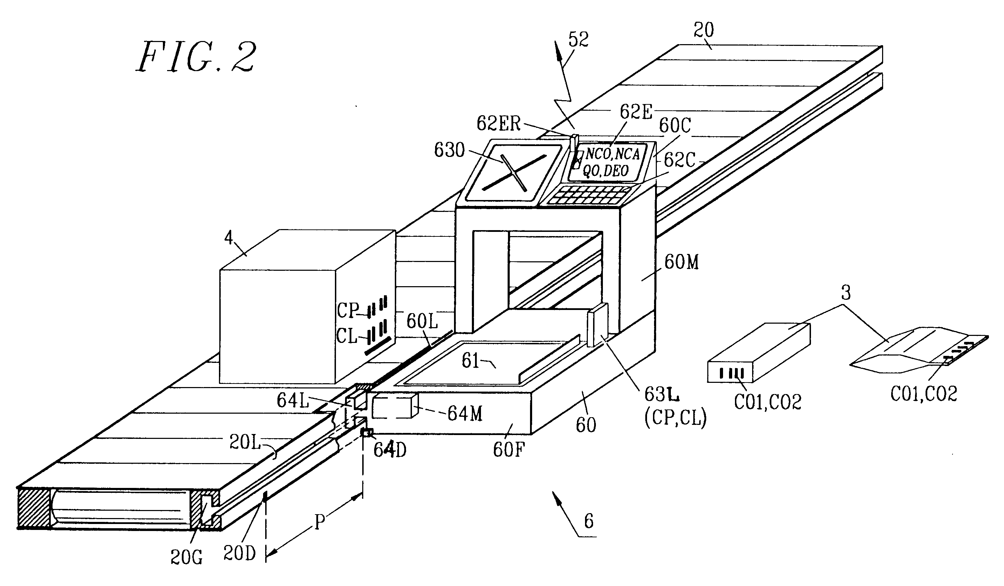

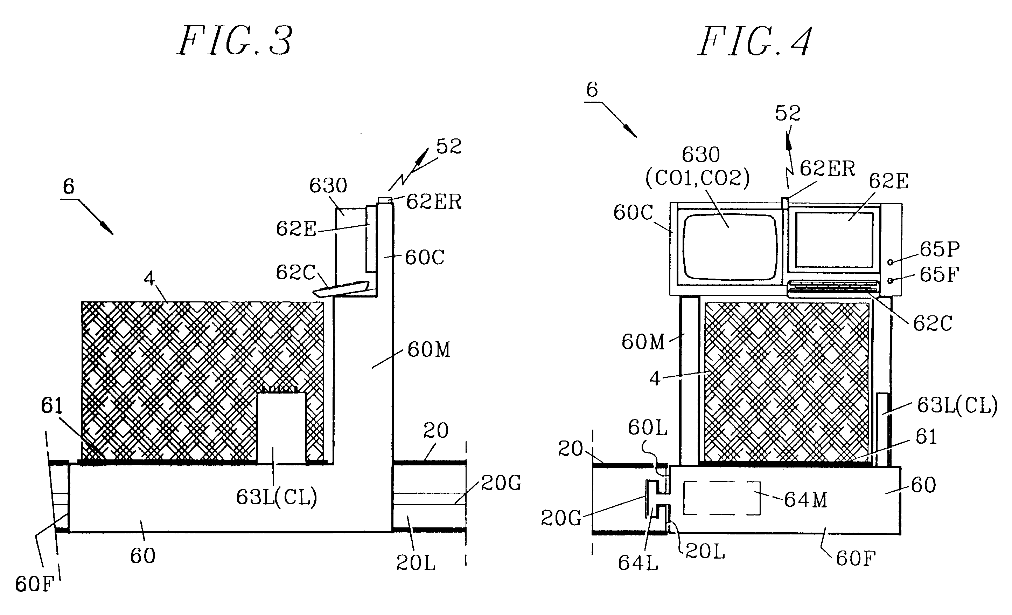

Les moyens mobiles de contrôle des objets sont sous la forme d'une tablette intégrée de préparation (TIP) 6. Comme montré aux figs. 2 à 4, la tablette 6 présente un socle rectangulaire 60 dont la face supérieure est sensiblement au même niveau que le convoyeur secondaire 20 et dont un côté longitudinal 60L est en regard du côté longitudinal 20L du convoyeur 20 opposé au convoyeur principal 11. Les côté 20L et 60L sont pourvus de moyens de guidage et de préférence de déplacement motorisé en translation de la tablette par exemple du type à double crémaillère et pignons. Le déplacement de la tablette s'effectue dans l'allée 25 entre le convoyeur secondaire 20 et le casier 22, et par pas P égal à la largeur des colonnes 23. Comme on le verra dans la suite, lorsque le côté de face 60F de la tablette 6 est arrêté sensiblement au droit d'une colonne 23 du casier 22, le préparateur PR prend au moins un objet 3 dans la colonne pour le placer dans un contenant 4 posé sur un plateau-peseur 61 affleurant la face supérieure du socle 60, puis si l'objet est le dernier à être placé dans le contenant au poste de chargement, pousse le contenant chargé 4 vers le convoyeur principal 11 en traversant par glissement le convoyeur secondaire 20.

La tablette 6 comprend une unité logique centrale de traitement de données et messages (CPU) à microprocesseur (non représentée) qui joue le rôle de terminal de contrôle par rapport à l'ordinateur central 5 et qui est reliée à différents périphériques 61, 62E, 62C, 62ER, 63L, 63O, 64M et 60D inclus dans la tablette. Ces périphériques sont conçus comme des moyens interactifs pour le dialogue entre le préparateur PR et l'unité de traitement et l'ordinateur central d'une part, et entre l'unité de traitement et des moyens pour identifier et contrôler les contenants et les objets et optionnellement des moyens motorisés pour déplacer la tablette 6 à proximité de colonnes sélectionnées 23, d'autre part.

La tablette comporte deux montants creux arrière 60M fixés sur le socle 60 et supportant une console horizontale 60C. La console 60C renferme de préférence l'unité de traitement et supporte un écran de visualisation 62E, un clavier 62C et un émetteur-récepteur codeur-décodeur 62ER du type à infrarouge selon la réalisation préférée. Ces trois derniers éléments constituant les moyens interactifs de dialogue avec le préparateur sont classiques et choisis en fonction notamment des température, luminosité et rayonnements parasites régnant dans le site de préparation et de la distance du poste de chargement à l'ordinateur central.

L'écran 62E peut être cathodique, à cristaux liquides ou fluorescent par exemple. Cet écran visualise diverses instructions à l'attention du préparateur telles que adresses (numéros) de colonne et de case, signalement de la position d'arrêt correcte de la tablette après déplacement de la tablette à proximité d'un colonne sélectionnée selon un liste, emplacement d'objets à prélever dans une case d'une colonne, la case et la colonne étant dessinées schématiquement à l'écran par rapport à tout ou partie du moyen de stockage, désignation et quantité de ces objets, masses et codes de ces objets, invitation à valider des objets prélevés et pesés, des codes d'erreur, etc...Plus généralement, l'écran affiche les différentes opérations et les choix que le préparateur doit effectuer pour préparer un ensemble d'objets à poser dans un contenant.

Le clavier 62C est de préférence un clavier alphanumérique avec des touches de fonction. Il sert à saisir des données relatives notamment à des objets manquants à prélever dans des cases indiquées au préparateur, à des décisions telles que le forçage de la continuation d'une préparation de liste après lecture d'un code erroné ou pesage d'une masse d'objet inattendue, à indiquer des codes-à-barres devenus illisibles par des lecteurs électroniques, etc...

L'émetteur-récepteur 62ER a par exemple sa face photosensible visible sur la console de tablette 60C et est orienté vers l'ordinateur central 5. Lorsque la tablette et l'ordinateur ne sont pas en visibilité directe, comme dans la majorité des sites de préparation, des balises-récepteurs de la liaison 52 relaient les messages échangés selon un protocole prédéterminé entre la tablette 6 et l'ordinateur 5. Par exemple, des balises sont disposées au plafond du site, au-dessus des allées 25 des poste de chargement et/ou en partie supérieure des casiers 22, et/ou à des extrémités des travées de convoyeur des gares.

Les moyens de contrôle des objets comprennent un dispositif de pesage électronique à plateau-peseur 61 inclus dans le socle de tablette 60 et deux lecteurs électroniques 63L et 63O.

Le dispositif de pesage est un balance électronique classique dont les dimensions et les tolérances sont adaptées aux masses des contenants et objets. Chaque masse évaluée par le dispositif de pesage est affichée sur l'écran 62E. Le dispositif de pesage offre une stabilisation rapide pour ne pas pénaliser la vitesse de travail du préparateur.

Le premier lecteur 63L a son boîtier fixé sur le socle 60 ou est intégré à un montant 60 M de la tablette, de préférence en bordure d'un côté longitudinal de la tablette et du plateau-peseur 61 à l'opposé du convoyeur secondaire 20. Ce premier lecteur lit le code de liste d'objets CL sur le contenant 4 en attente de chargement pris par le préparateur PR sur le convoyeur secondaire 20, et puis pesé par le dispositif de pesage.

Le second lecteur 63O est fixé sur la console de tablette 60C à côté de l'ensemble écran 62E et clavier 62C. Il lit les codes C01 et CO2 de chaque objet à prélever dans le casier 22, ou d'un premier objet parmi un lot de mêmes objets à prélever dans une case 24 du casier 22.

Les lecteurs 63L et 63O sont de préférence des lecteurs à laser multidirectionnel pour codes-à-bares, par exemple du type crayons optiques amovibles, ou bien peuvent être des lecteurs fixes, ou bien la lecture automatique peut être remplacée par saisie des codes au clavier 62C.

Dans une version de base motorisée, la tablette 6 comprend des moyens moteurs de déplacement automatique le long du convoyeur secondaire 20. Les moyens moteurs sont d'un type connu pour charioter pas-à-pas et suivant des directions opposées la tablette, et peuvent être électriques, pneumatiques ou hydrauliques. Par exemple, les moyens de déplacement selon la réalisation illustrée comprennent un moteur électrique 64M logé dans le socle 60 et entraînant par engrenage deux roues dentées situées devant le côté longitudinal de tablette 60L et engrenant avec deux crémaillère longitudinales fixées latéralement dans le côté 20L du convoyeur 20. Le côté de tablette 60L comporte une languette 64L montée à coulissement dans une glissière de guidage longitudinale 20G pratiquée dans le côté adjacent 20L du convoyeur 20. Des détecteurs de position 64D-20D, par exemple du type cellule photoélectrique ou cellule inductive autonomes alimentées par piles, comportent une partie réceptrice 64D qui est fixée au côté du socle de tablette 60L à proximité du côté de face 60F et reliée au moteur 64M à travers l'unité de traitement centrale (CPU), et des parties émettrices 20D jalonnant le côté de convoyeur 20L par pas P. L'unité de traitement connaît en permanence la position de la tablette 60L le long du convoyeur 20, c'est-à-dire le numéro de la partie émettrice 20D en face de laquelle est positionnée la partie réceptrice 64D. Chaque fois que l'unité de traitement décide un déplacement de la tablette 6 en correspondance avec une colonne 23 où des objets 3 sont à prélever, l'unité de traitement détermine automatiquement la direction du déplacement de la tablette vers l'avant ou l'arrière et calcule le nombre NP de pas P correspondant au nombre de parties émettrices de détecteur 20D pour positionner et arrêter convenablement la tablette 6 au moyen du moteur 64M.

Selon une autre version plus simple, le déplacement de la tablette n'est pas automatisé. Le préparateur PR pousse ou tracte éventuellement au moyen d'un moteur qu'il commande lui-même et qui allège le travail physique, la tablette guidée par l'assemblage à languette 64L-glissière 20G en face de la colonne de casier sélectionnée 23 dont le numéro ou l'emplacement est indiqué à l'écran 62E. Dans cette version, le positionnement de la tablette 6 relativement aux colonnes de casier 23 peut encore être assisté par les détecteurs de position 64D-20D et vérifié par l'unité de traitement embarquée par la tablette; dans ce cas un signal visuel ou sonore indique au préparateur que la tablette est en regard de la partie émettrice 20D correspondant à la colonne sélectionnée.

De préférence, selon cette version à déplacement manuel de la tablette, un servofrein (non représenté) équipe la tablette. Le servofrein est commandé par l'unité de traitement lorsque la tablette arrive au voisinage de la position de la colonne ou case sélectionnée afin de freiner progressivement la tablette et l'arrêter et donc signaler par pression sensorielle au préparateur le positionnement correct de la tablette. Le servofrein peut par exemple comprendre deux patins qui sont pressés progressivement et latéralement en direction opposées dans la glissière 20G.

Selon une autre variante, la tablette 6 est intégrée à un chariot roulant sur le sol ou des rails et supportant un plateau inférieur portant le préparateur PR, de préférence en position assis. Cette variant diminue la fatigue du préparateur particulièrement lorsque le casier comporte un nombre élevé de colonnes.

Enfin, selon une autre variante plus complexe, mais plus lente, le préparateur PR est remplacé par un robot solidaire de la tablette qui effectue toutes les opérations de manutention du préparateur PR décrites ci-après sous la commande directe de l'unité de traitement centrale. Le robot comporte un organe de préhension à déplacement tridimensionnel, adapté à la forme des objets à saisir et prélever.

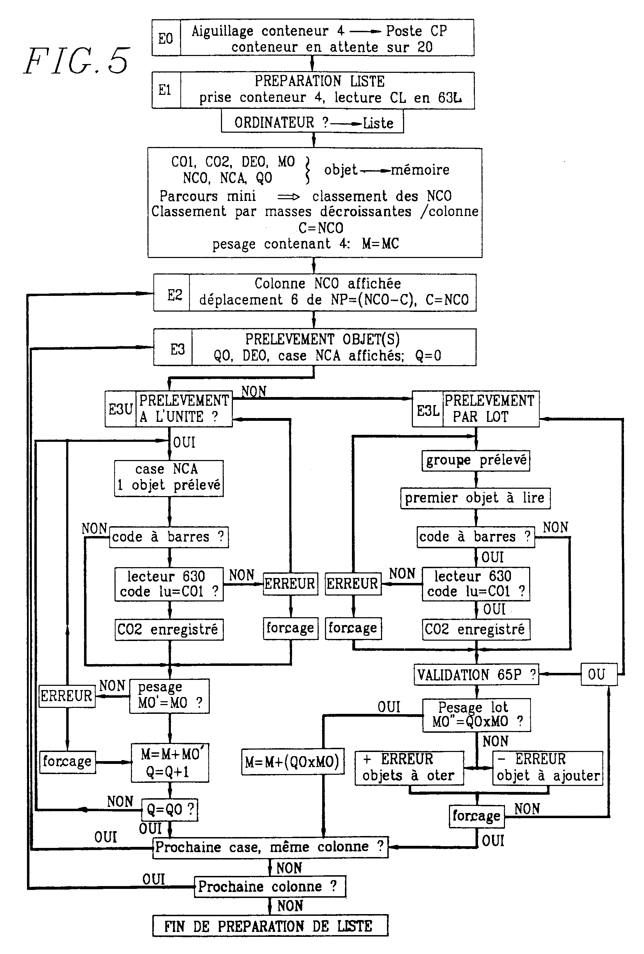

Un cycle de préparation relative à une liste d'objets identifiés par un code de liste CL à contrôler et charger dans un contenant 4 en attente dans un poste 2 identifié par un code de poste CP est décrit ci-après en référence à l'algorithme montré à la Fig. 5. Après une étape préliminaire EO relative à l'aiguillage d'un conteneur 4 dans le poste 2, le cycle de préparation de liste comprend essentiellement une étape de traitement et classement des données des objets de la liste E1, une étape iterative de déplacement de tablette et de traitement de colonne E2, et une étape itérative de prélèvement d'objets par case E3.

Dans l'étape préliminaire EO, le contenant 4 arrivant par le convoyeur principal 11 est transféré par l'aiguileur 21 du poste considéré 2, en réponse à la lecture du code de poste CP sur le contenant 4 par le lecteur de code de poste 213. Le contenant 4 est ensuite en attente de chargement sur le convoyeur secondaire 20. Le préparateur PR affecté au poste considéré 2 choisit l'un des contenants qui est en attente sur le convoyeur 20. De préférence, ce choix respecte l'ordre de la file d'attente des contenants, le premier contenant dans la file est le premier contenant chargé. Toutefois, un autre ordre de selection peut être indiqué au préparateur.

A la première étape E1 de la préparation de liste proprement dite, la liste à préparer est identifiée et le contenant 4 tel qu'il a été transféré vers le convoyeur 20 est pesé.

Les codes CP et CL du contenant sont présentés devant le lecteur 63L. L'unité de traitement de la tablette 6 du poste considéré interroge d'ordinateur central de supervision 5 selon le protocole de message en lui transmettant notamment des adresses de poste et de liste. L'ordinateur 5 transmet à l'unité de traitement la liste digitalisée détaillée des objets à prélever qui est mémorisée et traitée par l'unité de traitement. Pour chaque objet ou lot d'objets de la liste sont mémorisés en mémoire RAM de l'unité de traitement, les codes CO1 et CO2 et la désignation DEO de l'objet, la masse MO de l'objet, les numéros NCO et NCA de la colonne et de la case où se trouve l'objet dans le casier 22, ainsi que la quantité QO de ce même objet à prélever. Le logiciel inclus dans l'unité de traitement est conçu de manière que les objets soient classés par colonne de casier, et que les colonnes où les objets de la liste sont à prélever soient classées suivant un ordre qui confère un parcours minimal de la tablette 6 pour qu'elle soit successivement positionnée en face des colonnes correspondantes. Les objets dans une colonne sont classés selon un ordre de priorité prédéterminé, par exemple en fonction de leur encombrement, ou de préférence classés selon l'ordre de leurs masses décroissantes afin de poser les plus lourd objets au fond du contenant.

En outre, dès lecture du code CL, l'unité de traitement égalise si nécessaire une variable de numéro de colonne C au numéro de la colonne en face de laquelle est placée la tablette 6 au début du cycle.

Le préparateur PR pose le contenant sélectionné 4 sur le plateau-peseur 61 de la tablette 6. L'unité de traitement mémorise la masse du contenant 4 : $M = MC$, où M et une variable de masse.

La seconde étape E2 débute par l'affichage à l'écran 62E du numéro et de l'emplacement de la première colonne NCO selon le classement établi ci-dessus, et par le déplacement de la tablette 6 jusqu'à la première colonne, par actionnement du moteur 64M en direction de la première colonne. L'unité de traitement arrête le moteur lorsqu'elle a compté un nombre NP de pas P, c'est-à-dire un nombre de détecteurs de position de colonne 20D égal à la différence NCO - C au signe près.

La variable de numéro de colonne C est égalisée au numéro de la première colonne par l'unité de traitement.

La colonne de numéro $C = NCO$ est visualisée en détail avec ses diverses cases, lorsque le moteur 64 M est arrêté.

L'étape suivante E3 consiste en un prélèvement du premier objet dans la première colonne. La case où l'objet est à prélever est par exemple agrandie ou signalée par un trait épais avec son numéro NCA sur l'écran 62E. A des fins d'autoverification par le préparateur, le numéro de la case NCA correspond au code CO1 de l'objet, et la désignation lisible DEO de l'objet sont affichés dans la case ou à proximité de celle-ci. La quantité QO d'objets a prélever est également affichée. Une variable de quantité Q est mise à zéro.

De préférence, lorsque la quantité d'objets QO est supérieure à l'unité, l'écran 62E signale à l'opérateur par "PRELEVEMENT A L'UNITE" que les objets sont à prélever et contrôler un par un, et par "PRELEVEMENT PAR LOT" que les objets sont à prélever et contrôler ensemble. Ces deux types de prélèvement E3U et E3L sont décrit ci-après.

E3U. Lorsqu'une autorisation de prélèvement à l'unité de la quantité d'objets QO est annoncée à l'écran, le préparateur PR et l'unité de traitement procèdent aux opérations suivantes pour chacun des QO objets.

Le préparateur prend l'objet dans la case désignée NCA. Si l'existence d'un code-à-barres est signalée à l'écran 62E par "CODE A VERIFIER", le préparateur présente cet objet devant le second lecteur 63O de la tablette 6. L'unité de traitement compare le code CO1 lu sur l'objet avec celui mémorisé, en réponse à l'identité des codes, et signale par une sonorité et/ou l'affichage momentané du code CO1 à l'écran que l'objet présenté est bien à prélever. L'unité de traitement enregistre également le code supplémentaire CO2 de l'objet lu par le lecteur 63O et le transmettra avec les autres codes CO1 et CO2 des objets de la liste prélevés à l'ordinateur central à la fin du cycle de préparation.

Si le code lu CO1 diffère de celui enregistré, le mot "ERREUR" est affiché. Une tell erreur peut être due au prélèvement d'un objet dans une autre case du casier 22 ; dans ce cas le préparateur range l'objet erroné et prélève un autre objet convenablement référencé. L'erreur peut être due par exemple à un code CO1 ou CO2 illisible par le lecteur et/ou invalidé par l'unité de traitement suivant un algorithme prédéterminé de validation de code ; dans ce cas un responsable intervient avec une clé physique 65F qui est introduite dans le clavier 62C, ou selon une autre variante, compose un mot de passe prédéterminé au clavier 62C, pour forcer l'unité de traitement à passer à l'opération de pesage suivante.

Le préparateur pose l'objet validé 3 dans le contenant 4. Le dispositif de pesage indique la masse $M + MO'$ à l'unité de traitement qui effectue la différence $(M + MO') - M$ afin de comparer cette différence, égale à la masse MO' de l'objet prélevé, à la masse enregistrée MO. S'il y a égalité, à une tolérance de pesage prédéterminée près, l'objet posé dans le contenant est définitivement validé. S'il y a inégalité, le mot "ERREUR" est affiché et soit le préparateur ôte l'objet incriminé et recommence l'étape de vérification d'objet E3U, soit un responsable force la continuation de la préparation avec la clé 65F ou le mot de passe, comme dans la procédure d'erreur décrite ci-dessus.La variable de masse M est égalisée à la masse réelle pesée $M = M + MO'$, qu'il y ait erreur et forçage ou non.

Puis le préparateur opère de la même façon le prélèvement d'objet, la lecture de code et la pesée d'objet pour chacun des QO objets. Après la pesée de chaque objet validé, l'unité de traitement, modifie la variable M en $M + MO'$ et augmente d'une unité la variable Q, soit $Q = Q + 1$, et la compare à QO. Dès que $Q = QO$, l'unite de traitement passe à une étape de traitement des objets à prélever dans la case suivant, qui peut être en priorité dans la même colonne NCO ou dans une autre colonne.

E3L. Lorsqu'une autorisation de prélèvement par lot de la quantité d'objets QO est annoncée à l'écran, le préparateur PR prélève les objets par groupes, dits également "poignées" si la quantité QO est élevée.

Si un code-à-barres est annoncé à l'écran 62E par "CODE A VERIFIER", le préparateur ne présente que l'un des objet du premier groupe prélevé du lot ou ne présente que l'un des objet de chacun des groupes prélevés du lot devant le lecteur 63O. Comme à l'étape E3U, le code CO1 lu sur l'objet est validé par comparaison avec celui transmis par l'ordinateur 5 et en réponse à l'identité des codes comparés, la validation étant concrétisée par un signal sonore et/ou l'affichage momentané du code CO1. Le code CO2 lu sur l'objet est également mémorisé pour transmission ultérieure.

Si le code lu CO1 est erroné, ce qui est signalé par l'affichage du mot "ERREUR", le préparateur soit recommence l'étape E3U en cherchant à présenter au lecteur 63O un objet de groupe prélevé ayant la bonne référence, soit force la continuation de la préparation grâce à l'introduction de la clé 65F ou du mot de passe au clavier 62C.

En variante, à la place de la vérification précédente du code CO1 d'un premier objet du lot ou d'un groupe du lot, ou en complément à cette vérification, avant ou après celle-ci, le poids individuel du premier objet prélevé peut être vérifié par le dispositif de pesage, comme dans l'étape E3U. Après la pose du premier objet dans le contenant, l'unité de traitement valide alors le poids individuel du premier objet lorsque la différence entre la masse du contenant chargé et la masse mémorisée du contenant est sensiblement égale à la masse de l'objet mémorisée pour autoriser la pose ci-après du groupe ou du lot d'objet.

Puis le préparateur pose le groupe d'objets dans le contenant 4 sur le plateau-peseur 61. Les autres groupe du lot sont prélevés de la case désignée 24 et posés directement dans le contenant 4 sans ou avec passage de l'un des objets de chacun des autres groupes devant le lecteur 63O. Dès que le préparateur PR estime que la quantité d'objets prélevés correspond à celle indiquée QO indiquée par l'écran 62E, il valide son prélèvement en appuyant sur une touche fonction du clavier 62C ou sur un bouton particulier 65P du clavier.

Le dispositif de pesage indique une masse $M + MO''$, où MO'' est la masse de l'ensemble des objets prélevés et posés. L'unité de traitement signale par le mot "ERREUR" toute inégalité entre M + MO'' et la masse recherchée M + (QO x MO) à la tolérance de pesage près. Si le mot "ERREUR" est précédé du signe +, le préparateur ôte des objets du contenant, ou si le mot "ERREUR" est précédé du signe -, le préparateur ajoute des objets dans le contenant. Une nouvelle sollicitation du bouton 65P provoque la disparition du mot "ERREUR", ce qui signale l'égalité M + MO'' = M + (QO x MO), ou maintient l'affichage du mot "ERREUR" ce qui signale une différence entre la désignation affichée DEO et les objets prélevés. Dans ce dernier cas, les groupes d'objets prélevés sont retirés du contenant 4, et l'étape E3L est recommencée. Selon une autre possibilité, lorsque le mot "ERREUR" persiste sur l'écran 62E avec un changement alternatif des signes positif et négatif de réponse au retrait à la pose d'un objet, un responsable peut décider de forcer la continuation de la préparation de la liste en utilisant la clé 65F ou en tapant le mot de passe. Dans tous les cas, avec ou sans erreur, la variable M est modifiée à M + MO''.

Lorsqu'un prélèvement d'objet(s) a ainsi été réalisé dans une case, l'unité de traitement vérifie si d'autres cases de la même colonne ont des objets à prélever. Pour le prélèvement dans chaque case, l'étape E3 est effectuée.

Lorsque tous les prélèvements demandé pour ladite colonne sont achevés, l'unité de traitement consulte dans sa mémoire les données concernant la prochaine colonne 23 du casier 22, et commande le moteur 64M pour que la tablette 6 se déplace à la prochaine colonne dans une ou des cases de laquelle des prélèvements d'objets sont à effectuer. Une nouvelle étape E2 est réalisée, puis des étapes E3 sont réalisées en nombre égal à celui des cases à prélèvement de ladite prochaine colonne.

Lorsque tous les prélèvements dans les cases correspondant à la liste d'objets à préparer sont effectués, l'écran 62C indique "FIN DE PREPARATION DE LISTE". Le préparateur PR pousse le contenant 4 ainsi chargé du plateau- peseur 61 sur le convoyeur principal 11 à travers le convoyeur secondaire 20. Le dispositif de pesage signale une masse nulle M = O à l'unité de traitement qui est réinitialisée au début de l'étape E1, en attente d'une prochaine préparation de liste d'objets pour un autre contenant 4 sur le convoyeur 20.

Le conteneur qui vient d'être chargé est acheminé par le convoyeur principal 11 soit vers un ou plusieurs autres postes de chargement 2 pour compléter son chargement, soit vers un poste de fermeture et/ou d'expédition de conteneur par exemple.

Selon une autre variante sensiblement plus complexe, l'unité de traitement dans la tablette 6 est relié par câble électrique ou par tout autre moyen de transmission de signaux tel qu'une liaison infrarouge, à un circuit matriciel connu de voyants, tels que diodes LED, qui est fixé au casier 22. Les voyants sont assignés respectivement aux cases 24 du casier, et sont par exemple fixés devant les cases, avec des faces transparentes sur lesquelles sont inscrites les désignations DEO des objets respectivement.

A chaque voyant, et donc à chaque case, sont attribuées une adresse de ligne et une adresse de colonne qui sont transmises à un circuit d'adressage de ligne et de colonne dans le circuit matriciel par l'unité de traitement, en réponse au début de l'étape de prélèvement E3 pour la case considérée. Ainsi, le préparateur PR est dirigé vers la case sélectionnée au moyen du voyant respectif allumé pendant tout l'étape E3. Cette amélioration permet de réduire les erreurs de prélèvement entre cases.

Selon encore une autre variante, le signalement d'une case sélectionnée est obtenu au moyen d'un faisceau lumineux émis par une source lumineuse, telle que laser, supportée par la console 60C de la tablette 6. L'orientation du faisceau lumineux est commandée par l'unité de traitement afin que celui-ci soit dirigé vers la case sélectionnée et illumine au moins partiellement cette case où au moins un objet est à prélever. La visualisation du spot du faisceau sur les cases peut être améliorée au moyen d'une couche fluorescente ou de catodioptres recouvrant le contour des faces des cases. Cette variante remédie au câblage fastidieux et coûteux des voyant selon la variante précédente.

Lorsque les colonnes 22 dans le casier 2 sont sensiblement identiques, la source à faisceau lumineux orientable peut être remplacée par un colonne de sources lumineux fixes dirigées vers et réparties comme les cases dans une colonne dans le casier ; la colonne de sources est fixée à la tablette, et l'une des sources lumineuses en face d'une case sélectionnée d'une colonne sélectionnée devant laquelle la tablette est arrêtée, est activée pour éclairer au moins partiellement ladite case.

## Revendications

1.  Procédé de préparation de listes d'objets à charger dans des contenants, selon lequel les objets (3) sont prélevés par quantités prédéterminées (Q0) dans des cases (24) de plusieurs moyens de stockage d'objets (22) respectivement, et ladite préparation relative à l'un des moyens de stockage est assistée par des moyens de contrôle d'objets (6) déplaçables devant le moyen de stockage (22),

    lesdits moyens de contrôle (6) comprenant une unité de traitement centrale de données pour traiter et mémoriser des données, un dispositif de pesage (60-61) relié à l'unité de traitement et ayant un plateau-peseur (61) pour poser un contenant (4), et des moyens interactifs (62C, 62E) reliés à l'unité de traitement pour dialoguer avec un moyen de prélèvement d'objet (PR) et signaler des données d'objet,

caractérisé par les étapes suivantes pour charger un contenant en attente devant l'un (22) des moyens de stockage :

a) lecture d'un code de liste (CL) porté par un contenant détermine (4) par lesdits moyens mobiles de contrôle d'objets (6), ledit code de liste étant relatif à une liste d'objets qui sont au moins en partie à prélever dans ledit moyen de stockage (22) et, en réponse à la lecture du code de liste, mémorisation de données dans l'unité de traitement pour chacune de quantités d'objets (QO) de la liste à prélever dans le moyen de stockage, lesdites données d'objets étant relatives à la masse de la quantité d'objets (QO x MO), à l'emplacement (NCO, NCA) de la case (24) dans ledit moyen de stockage où est stockée la quantité d'objets, et à la quantité (Q0) d'objets à prélever dans la case ;

b) pesage du contenant (4) par le dispositif de pesage (60-61) et mémorisation de la masse (MC) du contenant dans l'unité de traitement, et

c) traitement successifs des quantités d'objets de la liste à prélever dans ledit moyen de stockage, le traitement d'une quantité d'objets comprenant :

c1) signalement de l'emplacement (NCO, NCA) de la case (24) où la quantité est à prélever, par les moyens interactifs (62C, 62E), et déplacement des moyens de contrôle (6) sensiblement à proximité de la case signalée,

c2) prélèvement de la quantité d'objets dans la case signalée (24), et

c3) pose de la quantité d'objets prélevée dans le contenant (4) et pesage du contenant ainsi chargé par le dispositif de pesage (60-61) afin que l'unité de traitement traite la quantité d'objets suivante dans la liste lorsque la différence entre la masse du contenant chargée (M + MO'') et la masse mémorisée (M) du contenant avant la pose de la quantité d'objets prélevée est sensiblement égale à la masse de la quantité mémorisée (QO x MO).

2. Procédé conforme à la revendication 1, comprenant le signalement d'une invitation de prélèvement d'objets à l'unité par les moyens interactifs (62C, 62E) pour au moins une quantité d'objets (QO) à prélever dans le moyen de stockage d'objets (22) dont le traitement est décomposé en des traitements d'objets successifs comprenant chacun :

c2) prélèvement d'un objet (3) dans la case signalée, et

c3) pose de l'objet prélevé dans le contenant (4) et pesage de contenant(4) ainsi chargé par le dispositif de pesage (60-61) afin que l'unité de traitement traite l'objet suivant dans la quantité lorsque la différence entre la masse du contenant chargé (M + MO') et la masse mémorisée du contenant (M) avant la pose de l'objet est sensiblement égale à la masse de l'objet mémorisée (MO).

3. Procédé conforme à la revendication 2, caractérisé en ce que les données d'objets mémorisées comprennent, en outre, un code d'objet (CO1) et en ce que le procédé comprend, entre le prélèvement et la pose d'un objet (3), la lecture d'un code d'objet (CO1) porté par l'objet par les moyens de contrôle (6) afin d'autoriser la pose de l'objet prélevé dans le contenant (4) lorsque les codes d'objet mémorisé et lu sont identiques.

4. Procédé conforme à la revendication 1, comprenant le signalement d'une invitation de prélèvement d'objets par lot par les moyens interactifs pour au moins une quantité d'objets à prélever dans le moyen de stockage d'objets dont le traitement comprend, avant la pose de la quantité d'objets, la pose d'un objet de ladite quantité dans le contenant et le pesage du contenant ainsi chargé par le dispositif de pesage afin que l'unité de traitement valide le poids individuel de l'objet lorsque la différence entre la masse du contenant chargé et la masse mémorisée du contenant avant la pose de l'objet est sensiblement égale à la masse de l'objet mémorisée pour autoriser la pose de toute la quantité d'objets.

5. Procédé conforme à la revendication 1 ou 4, comprenant le signalement d'une invitation de prélèvement d'objets par lot par les moyens interactifs (62C, 62E) pour au moins une quantité d'objets (QO) à prélever dans le moyen de stockage d'objets (22) dont le traitement comprend, avant la pose de la quantité d'objet, la lecture d'un code d'objet (CO1) porté par au moins l'un des objets (3) de ladite quantité par les moyens de contrôle (6) afin d'autoriser la pose de la quantité d'objets prélevée dans le contenant (4) lorsque le code d'objet lu (CO1) est identique à un code d'objet inclus dans les données d'objets mémorisées.

6. Procédé conforme à la revendication 3 ou 5, caractérisé par une lecture d'un code supplémentaire (CO2) porté par l'objet simultanément à la lecture du code d'objet (CO1), ledit code supplémentaire (CO2) étant mémorisé dans les moyens de contrôle (6) pour traitement et/ou transmission ultérieurs à la préparation de la liste.

7. Procédé conforme à la revendication 1 ou 5, caractérisé en ce que, lors du pesage du contenant chargé, les moyens interactifs (62C, 62E) signalent une inégalité (ERREUR) entre ladite différence (M + MO'' - M) et la masse de la quantité mémorisée (QO x MO) afin d'ôter ou d'ajouter des objets dans le contenant.

8. Procédé conforme à la revendication 7, caractérisé en ce que le signe (± ERREUR) de ladite inégalité est signalée par les moyens interactifs (62C, 62E).

9. Procédé conforme à l'une quelconque des revendications 1 à 8, caractérisé en ce que, en réponse à la lecture d'un code de liste (CL) sur un contenant, l'unité de traitement classent les objets de la liste en fonction des emplacements de case mémorisés, afin de déterminer un parcours minimal des moyens de contrôle pour qu'ils soient positionnés successivement à proximité des cases dont les emplacements (NCO, NCA) sont mémorisés.

10. Procédé conforme à l'une quelconque des revendication 1 à 9, caractérisé par un déplacement des moyens de contrôle (6) bidirectionnel et pas-à-pas chaque pas (P) étant sensiblement égal à la distance entre deux cases adjacentes (24) du moyen de stockage suivant la direction du déplacement.

11. Procédé conforme à l'une quelconque des revendications 1 à 10, caractérisé par un classement des objets à prélever dans une liste en fonction des masses (MO) des objets, de préférence selon l'ordre décroissant des masses.

12. Procédé conforme à l'une quelconque des revendications 1 à 11, caractérisé par une répartition des cases (24) dans les moyens de stockage (22) en colonne (23) sensiblement perpendiculaires à la direction de déplacement des moyens de contrôle (6), et par un classement des emplacements de case par colonne en fonction de données d'objets mémorisées incluant l'emplacement (NCO) d'une colonne dans les moyens de stockage et l'emplacement (NCA) d'une case dans une colonne, par l'unité de traitement, les emplacements mémorisés (NCA) de cases dans une même colonne étant de préférence classés selon l'ordre décroissant des masses des objets à prélever dans lesdites cases, par le signalement par les moyens interactifs (62C, 62E) des emplacements de la colonne et de la case où une quantité d'objets est à prélever au début du traitement de celle-ci.

13. Procédé conforme à l'une quelconque des revendications 1 à 12, caractérisé par un signalement d'emplacement d'une case selon au moins l'une des formes suivantes : un dessin de la case (24) dans un dessin représentant le moyen de stockage (22) ou une partie (23) de celui-ci, une adresse (NCO, NCA) de la case dans le moyen de stockage, l'excitation d'un voyant attribué à la case, et l'illumination au moins partielle de la case par un faisceau lumineux.

14. Procédé conforme à l'une quelconque des revendications 1 à 13, caractérisé par des données d'objet mémorisées comprenant, en outre, une désignation (DEO) de l'objet, et par le signalement lisible de cette désignation par les moyens interactifs (62C, 62E) avec celui de l'emplacement de la case (NCO, NCA).

15. Procédé conforme à l'une quelconque des revendications 1 à 14, caractérisé par une interrogation de moyens informatiques superviseurs (5) par l'unité de traitement des moyens de contrôle (6) en réponse à la lecture du code de liste (CL), et une transmission des données desdits objet dans la liste qui sont à prélever dans ledit moyen de stockage (22) par les moyens informatiques en réponse à l'interrogation pour mémorisation dans l'unité de traitement.

16. Procédé conforme à la revendication 15, caractérisé par une liaison de transmission de données bidirectionnelle sans fil (52) entre les moyens de contrôle (6) et les moyens informatiques (5).

17. Procédé conforme à l'une quelconque des revendications 1 à 16, comprenant la prise d'un contenant (4) sur un convoyeur de contenants (11, 20) précédant la lecture du code de liste sur le conteneur.

18. Procédé conforme à la revendication 17, caractérisé en ce que la prise de contenant consiste à prendre l'un des contenants qui sont en attente sur un convoyeur secondaire (20) devant le moyens de stockage (22) et qui sont préalablement aiguillés automatiquement vers le convoyeur secondaire à partir d'un convoyeur principal de contenants (11).

19. Moyens mobiles de contrôle d'objets pour la mise en oeuvre du procédé conforme à l'une quelconque des revendications 1 à 18, comprenant une unité de traitement centrale de données pour traiter et mémoriser des données, un dispositif de pesage (60-61) relié à l'unité de traitement et ayant un plateau-peseur (61) pour poser un contenant (4), et des moyens interactifs (62C, 62E) reliés à l'unité de traitement pour dialoguer avec un moyen de prélèvement d'objet (PR) et signaler des données d'objet, caractérisés en ce qu'ils se présentent sous la forme d'une tablette (6) comportant, outre l'unité de traitement, le dispositif de pesage (60-69) et les moyens interactifs (62C, 62E), également un premier lecteur électronique (63L) relié à l'unité de traitement pour lire le code de liste (CL) porté par un contenant (4).

20. Moyens de contrôle conformes à la revendication 19, caractérisés en ce que la tablette (6) comprend des moyens (60L) pour guider la tablette (6) suivant les deux sens d'une direction prédéterminée (20G) devant le moyen de stockage (22), ladite direction étant de préférence celle de convoyage d'un convoyeur (20 ; 11) convoyant des contenants.

21. Moyens de contrôle conformes à la revendication 19 ou 20, caractérisés en ce que la tablette (6) comprend des moyens moteurs (64M) pour déplacer la tablette devant le moyen de stockage (22), d'une case (24) à la suivant, ou d'une colonne de cases (23) à la suivant des moyens de stockage sous la commande de l'unité de traitement.

22. Moyens de contrôle conformes à la revendication 19 ou 20, caractérisés en ce que la tablette comprend un servofrein commandé par l'unité de traitement pour freiner la tablette progressivement et l'arrêter au voisinage d'une case (24) ou d'une colonne (23) signalée où au moins un objet est à prélever.

23. Moyens de contrôle conformes à l'une quelconque des revendications 19 à 22, caractérisés en ce qu'ils comprennent des moyens (60D) pour détecter le positionnement de la tablette par rapport au moyens de stockage (22).

24. Moyens de contrôle conformes à l'une quelconque des revendications 19 à 23, caractérisés en ce que la tablette (6) comprend un second lecteur électronique (630) relié à l'unité de traitement pour lire des codes (CO1, CO2) portés par les objets (3).

25. Moyens de contrôle conforme à l'une quelconque des revendications 19 à 24, caractérisés en ce que la tablette (6) comprend des moyens (62ER) reliés à l'unité de traitement pour échanger des messages et données avec des moyens informatiques superviseurs (5) à travers une liaison bidirectionnelle (52) de préférence sans fil.

**Claims**

1. A method of preparing lists of articles to be loaded in containers, wherein the articles (3) are withdrawn in predetermined quantities (QO) from compartments (24) of a number of article storage means (22) respectively, and the said preparation relating to one of the storage means is assisted by article monitoring means (6) movable to a position in front of the article storage means (22),

   the said monitoring means (6) comprising a central data processing unit for processing and storing data, a weighing system (60 - 61) connected to the processing unit and having a weighing platform (61) to receive a container (4), and interactive means (62C, 62E) connected to the processing unit to communicate with an article withdrawal means (PR) and to signal article data,

   characterised by the following steps for loading a container on stand-by at one (22) of the article storage means:

   a) reading of a list code (CL) carried by a given container (4) by the said movable article monitoring means (6), said list code relating to a list of articles which are to be withdrawn at least partly from the said article storage means (22) and, in response to reading of the list code, data storage in the processing unit for each of the article quantities (QO) of the list to be withdrawn from the storage means, the said article data relating to the weight of the quantity of articles (QO x MO) at the location (NCO, NCA) of the compartment (24) in the said storage means in which the quantity of articles is stored, and to the quantity (QO) of articles to be withdrawn from the compartment;

b) weighing of the container (4) by the weighing system (60 - 61) and storage of the weight (MC) of the container in the processing unit, and

c) successive processing of the quantities of articles of the list to be withdrawn from the said article storage means, the processing of a quantity of articles comprising:

c1) signalling the location (NCO, NCA) of the compartment (24) from which the quantity is to be withdrawn, by the interactive means (62C, 62E), and movement of the monitoring means (6) substantially to the vicinity of the signalled compartment,

c2) withdrawal of the quantity of articles from the signalled compartment (24) and

c3) insertion of the withdrawn quantity of articles withdrawn into the container (4) and weighing of the container thus loaded, by the weighing system (60 - 61) so that the processing unit processes the next quantity of articles in the list when the difference between the weight of the loaded container $(M+MO'')$ and the stored weight (M) of the container before insertion of the withdrawn quantity of articles is substantially equal to the stored weight of the quantity (QO x MO).

2. A method according to claim 1, comprising signalling an article withdrawal invitation to the unit by the interactive means (62C, 62E) for at least one quantity of articles (QO) to be taken from the article storage means (22), the processing of which is broken down into successive article processing operations each comprising:

c2) withdrawal of an article (3) from the signalled compartment, and

c3) insertion of the withdrawn article in the container (4) and weighing of the thus loaded container (4) by the weighing system (60 - 61) so that the processing unit processes the article as to quantity when the difference between the weight of the loaded container $(M+MO')$ and the stored weight of the container (M) before the insertion of the article is substantially equal to the stored weight of the article (MO).

3. A method according to claim 2, characterised in that the stored article data also comprises an article code (CO1) and in that the method comprises, between withdrawal and insertion of an article (3), reading an article code (CO1) carried by the article by the monitoring means (6) in order to authorise the insertion of the withdrawn article in the container (4) when the stored and read article codes are identical.

4. A method according to claim 1, comprising signalling a article batch removal invitation by the interactive means for at least one quantity of articles to be withdrawn from the article storage means whose processing comprises, before insertion of the quantity of articles, inserting an article of the said quantity in the container and weighing of the thus loaded container by the weighing system so that the processing unit validates the individual weight of the article when the difference between the weight of the loaded container and the stored weight of the container before insertion of the article is substantially equal to the stored weight of the article to allow the entire quantity of articles to be inserted.

5. A method according to claim 1 or 4, comprising an article batch withdrawal invitation by the interactive means (62C, 62E) for at least one quantity of articles (QO) to be withdrawn from the article storage means (22) the processing of which comprises, before insertion of the article quantity, reading of an article code (CO1) carried by at least one of the articles (3) of the said quantity, by the monitoring means (6), in order to allow the withdrawn quantity of articles to be inserted in the container (4) when the read article code (CO1) is identical to an article code included in the stored article data.

6. A method according to claim 3 or 5, characterised by a reading of a supplementary code (CO2) carried by the article simultaneously with the reading of the article code (CO1), said supplementary code (CO2) being stored in the monitoring means (6) for processing and/or transmission subsequent to the preparation of the list.

7. A method according to claim 1 or 5, characterised in that during weighing of the loaded container the interactive means (62C, 62E) signal an inequality (ERROR) between the said difference $(M+MO''-M)$ and the stored quantity weight (QO x MO) in order to remove articles from or add them to the container.

8. A method according to claim 7, characterised in that the sign (± ERROR) of the said inequality is signalled by the interactive means (62C, 62E).

9. A method according to any one of claims 1 to 8, characterised in that in response to the reading of a list code (CL) on a container the processing unit classifies the articles of the list according to the stored compartment locations in order to determine a minimal travel of the monitoring means so that they are successively positioned in the vicinity of the compartments whose locations (NCO, NCA) are stored in the memory.

10. A method according to any one of claims 1 to 9, characterised by a bidirectional and step-by-step movement of the monitoring means (6), each step (P) being substantially equal to the distance between two adjacent compartments (24) of the storage means in the direction of movement.

11. A method according to any one of claims 1 to 10, characterised by the articles for withdrawal being classified in a list according to the weights (MO) of the articles, preferably in decreasing weight order.

12. A method according to any one of claims 1 to 11, characterised by a distribution of the compartments (24) in the article storage means (22) in columns (23) substantially perpendicular to the direction of movement of the monitoring means (6), and by a classification of the compartment locations by column in accordance with stored article data including the location (NCO) of a column in the storage means and the location (NCA) of a compartment in a column, by the processing unit, the stored locations (NCA) of compartments in one and the same column preferably being classified in decreasing weight order of the articles to be withdrawn from the said compartments, and by signalling by the interactive means (62C, 62E) of the locations of the column and the compartment from which a quantity of articles is to be withdrawn at the start of the processing thereof.

13. A method according to any one of claims 1 to 12, characterised by a signalling of the location of a compartment in at least one of the following forms: a drawing of the compartment (24) in a drawing representing the article storage means (22) or a part (23) thereof, an address (NCO, NCA) of the compartment in the article storage means, energisation of a pilot lamp associated with the compartment, and at least partial illumination of the compartment by a beam of light.

14. A method according to any one of claims 1 to 13, characterised by stored article data comprising, in addition, an article designation (DEO), and by readable signalling of this designation by the interactive means (62C, 62E) with that of the compartment location (NCO, NCA).

15. A method according to any one of claims 1 to 14, characterised by an interrogation of supervisory data processing means (5) by the processing unit of the monitoring means (6) in response to the reading of the list code (CL), and a transmission of the data of the said articles in the list which are to be withdrawn from the storage means (22) by the data processing means in response to interrogation for storage in the processing unit.

16. A method according to claim 15, characterised by a wire-less bidirectional data transmission link (52) between the monitoring means (6) and the data processing means (5).

17. A method according to any one of claims 1 to 16, comprising holding a container (4) on a container conveyor (11, 20) prior to reading the list code on the container.

18. A method according to claim 17, characterised in that the container hold comprises taking one of the containers which are on stand-by on a secondary conveyor (20) at the storage means (22) and which have previously been automatically routed to the secondary conveyor from a main container conveyor (11).

19. Movable article monitoring means for performing the method according to any one of claims 1 to 18, comprising a central data processing unit for processing and storing data, a weighing system (60 - 61) connected to the processing unit and having a weighing platform (61) to receive a container (4), and interactive means (62C, 62E) connected to the processing unit to communicate with an article withdrawal means (PR) and to signal article data, characterised in that they are in the form of a console (6) which, in addition to the processing unit, contains the weighing system (60 - 69) and the interactive means (62C, 62E), and also a first electronic reader (63L) connected to the processing unit to read the list code (CL) carried by a container (4).

20. Monitoring means according to claim 19, characterised in that the console (6) comprises means (60L) to guide the console (6) in the two hands of a given direction (20G) in front of the storage means (22), said direction preferably being that of conveying of a container-conveying conveyor (20; 11).

21. Monitoring means according to claim 19 or 20, characterised in that the console (6) comprises drive means (64M) to move the console at the storage means (22), from one compartment (24) to the next, or from a column of compartments (23) to the next of the storage means under the control of the processing unit.

22. Monitoring means according to claim 19 or 20, characterised in that the console comprises a servo-brake controlled by the processing unit to brake the console progressively and stop it in the vicinity of a signalled compartment (24) or column (23) from which at least one article is to be withdrawn.

23. Monitoring means according to any one of claims 19 to 22, characterised in that they comprise means (60D) for detecting the positioning of the console in relation to the storage means (22).

24. Monitoring means according to any one of claims 19 to 23, characterised in that the console (6) comprises a second electronic reader (630) connected to the processing unit to read codes (CO1, CO2) carried by the articles (3).

25. Monitoring means according to any one of claims 19 to 24, characterised in that the console (6) comprises means (62ER) connected to the processing unit to exchange messages and data with the supervisory data processing means (5) through a bidirectional and preferably wire-less link (52).

**Patentansprüche**

1. Verfahren zum Erstellen von Listen von in Behälter zu ladenden Gegenständen, gemäß dem die Gegenstände (3) in vorbestimmten Mengen (QO) in Fächern (24) mehrerer Mittel zur Lagerung von Gegenständen (22) jeweils entnommen werden und die Erstellung in bezug auf eines der Lagermittel durch Mittel zur Kontrolle von Gegenständen (6) unterstützt wird, die vor dem Lagermittel (22) verstellbar sind, wobei die Kontrollmittel (6) umfassen eine zentrale Datenverarbeitungseinheit zur Verarbeitung und Speicherung der Daten, eine Wiegeeinrichtung (60-61), die mit der verarbeitungseinheit verbunden ist und eine Wiegeplatte (61) zum Aufsetzen eines Behälters (4) aufweist, und mit der verarbeitungseinheit verbundene interaktive Mittel (62C, 62E), um mit einem Gegenstandsentnahmemittel (PR) einen Dialog zu führen und Gegenstandsdaten anzuzeigen,

gekennzeichnet durch die folgenden Schritte zum Beladen eines Behälters in Bereitschaft vor einem (22) der Lagermittel:

a) Lesen eines von einem bestimmten Behälter (4) getragenen Listencodes (CL) durch die beweglichen Mittel zur Kontrolle von Gegenständen (6), wobei der Listencode sich auf eine Liste von Gegenständen bezieht, die wenigstens teilweise dem Lagermittel (22) entnommen werden sollen, und in Reaktion auf das Lesen des Listencodes Speicherung von Daten in der Verarbeitungseinheit für jede Menge von im Lagermittel zu entnehmenden Gegenständen (QO) der Liste, wobei die Gegenstandsdaten sich auf die Masse der Menge von Gegenständen (QO x MO), auf den Ort (NCO, NCA) des Fachs (24) in dem Lagermittel, wo die Menge von Gegenständen gelagert ist, und auf die Menge (QO) von in dem Fach zu entnehmenden Gegenständen bezieht;

b) wiegen des Behälters (4) durch die Wiegeeinrichtung (60-61) und Speicherung der Masse (MC) des Behälters in der Verarbeitungseinheit, und

c) aufeinanderfolgende Verarbeitungen der Mengen von Gegenständen der Liste, die in dem Lagermittel entnommen werden sollen, wobei die Verarbeitung einer Menge von Gegenständen umfaßt:

c1) Anzeige des Orts (NCO, NCA) des Fachs (24), wo dem die Menge zu entnehmen ist, durch die interaktiven Mittel (62C, 62E) und Verstellung der Kontrollmittel (6) etwa in Nähe des angezeigten Fachs,

c2) Entnahme der Menge von Gegenständen in dem angezeigten Fach (24) und

c3) Legen der entnommenen Menge von Gegenständen in den Behälter (4) und wiegen des so beladenen Behälters (4) durch die Wiegeeinrichtung (60-61), damit die Verarbeitungseinheit die folgende Menge von Gegenständen in der Liste verarbeitet, wenn die Differenz zwischen der Masse des beladenen Behälters (M + MO'') und der gespeicherten Masse (M) des Behälters vor dem Legen der entnommenen Menge von Gegenständen im wesentlichen gleich der Masse der gespeicherten Menge (QO x MO) ist.

2. Verfahren nach Anspruch 1, umfassend die Anzeige einer Aufforderung zur Entnahme von Gegenständen an die Einheit mittels der interaktiven Mittel (62C, 62E) für wenigstens eine Menge von zu entnehmenden Gegenständen (QO) in dem Mittel zur Lagerung von Gegenständen (22), deren Verarbeitung in aufeinanderfolgende Verarbeitungen von Gegenständen zerlegt ist, jeweils umfassend:

> c2) Entnehmen eines Gegenstands (3) im angezeigten Fach, und
> c3) Legen des entnommenen Gegenstands in den Behälter (4) und Wiegen des so beladenen Behälters (4) durch die Wiegeeinrichtung (60-61), damit die Verarbeitungseinheit den Gegenstand gemäß der Menge verarbeitet, wenn die Differenz zwischen der Masse des beladenen Behälters (M + MO') und der gespeicherten Masse des Behälters (M) vor dem Legen des Gegenstandes im wesentlichen gleich der gespeicherten Masse des Gegenstandes (MO) ist.

3. Verfahren nach Anspruch 2, dadurch gekennzeichnet, daß die gespeicherten Daten von Gegenständen außerdem einen Gegenstandscode (CO1) umfassen und daß das Verfahren zwischen dem Entnehmen und dem Legen eines Gegenstandes (3) das Lesen eines von dem Gegenstand getragenen Gegenstandscodes (CO1) durch die Kontrollmittel (6) umfaßt, um das Legen des entnommenen Gegenstandes in den Behälter (4) zu gestatten, wenn der gespeicherte und der gelesene Gegenstandscode identisch sind.

4. Verfahren nach Anspruch 1, umfassend die Anzeige einer Aufforderung zur Entnahme von Gegenständen pro Gruppe durch die interaktiven Mittel für wenigstens eine Menge von zu entnehmenden Gegenständen in dem Mittel zur Lagerung von Gegenständen, deren Verarbeitung vor dem Legen der Menge von Gegenständen das Legen eines Gegenstands der Menge in den Behälter und das Wiegen des so beladenen Behälters durch die Wiegeeinrichtung umfaßt, damit die Verarbeitungseinheit das einzelne Gewicht des Gegenstandes validiert, wenn die Differenz zwischen der Masse des beladenen Behälters und der gespeicherten Masse des Behälters vor dem Legen des Gegenstandes im wesentlichen gleich der gespeicherten Masse des Gegenstandes ist, um das Legen der gesamten Menge von Gegenständen zu gestatten.

5. Verfahren nach Anspruch 1 oder 4, umfassend die Anzeige einer Aufforderung zur Entnahme von Gegenständen pro Gruppe durch die interaktiven Mittel (62C, 62E) für wenigstens eine Menge von zu entnehmenden Gegenständen (QO) in dem Mittel zur Lagerung von Gegenständen (22), deren Verarbeitung vor dem Legen der Gegenstandsmenge das Lesen eines von wenigstens einem der Gegenstände (3) der Menge getragenen Gegenstandscodes (CO1) durch die Kontrollmittel (6) umfaßt, um das Legen der entnommenen Menge von Gegenständen in den Behälter (4) zu gestatten, wenn der gelesene Gegenstandscode (CO1) mit einem in den gespeicherten Gegenstandsdaten enthaltenen Gegenstandscode identisch ist.

6. Verfahren nach Anspruch 3 oder 5, gekennzeichnet durch ein Lesen eines von dem Gegenstand getragenen Zusatzcodes (CO2) gleichzeitig mit dem Lesen des Gegenstandcodes (CO1), wobei der Zusatzcode (CO2) in den Kontrollmitteln (6) zur späteren Verarbeitung und/oder Übertragung zur Erstellung der Liste gespeichert wird.

7. Verfahren nach Anspruch 1 oder 5, dadurch gekennzeichnet, daß die interaktiven Mittel (62C, 62E) zur Zeit des Wiegens des geladenen Inhalts eine Ungleichheit (FEHLER) zwischen der Differenz (M + MO'' - M) und der Masse der gespeicherten Menge (QO x MO) anzeigen, um Gegenstände in dem Behälter zu entfernen oder hinzuzufügen.

8. Verfahren nach Anspruch 7, dadurch gekennzeichnet, daß das Vorzeichen (± FEHLER) der Ungleichheit durch die interaktiven Mittel (62C, 62E) angezeigt wird.

9. Verfahren nach einem beliebigen der Ansprüche 1 bis 8, dadurch gekennzeichnet, daß in Reaktion auf das Lesen eines Listencodes (CL) auf einem Behälter die Verarbeitungseinheit die Gegenstände der Liste abhängig von gespeicherten Fachorten sortiert, um eine minimale Wegstrecke für die Kontrollmittel zu bestimmen, damit sie aufeinanderfolgend in Nähe der Fächer positioniert werden, deren Orte (NCO, NCA) gespeichert werden.

10. Verfahren nach einem beliebigen der Ansprüche 1 bis 9, gekennzeichnet durch eine bidirektionale und schrittweise Verstellung der Kontrollmittel (6), wobei jeder Schritt (P) im wesentlichen gleich dem Abstand zwischen zwei benachbarten Fächern (24) des Lagermittels gemäß der Richtung der Verstellung ist.

11. Verfahren nach einem beliebigen der Ansprüche 1 bis 10, gekennzeichnet durch eine Sortierung der zu entnehmenden Gegenstände in einer Liste abhängig von den Massen (MO) der Gegenstände, vorzugsweise gemäß der abnehmenden Folge der Massen.

12. Verfahren nach einem beliebigen der Ansprüche 1 bis 11, gekennzeichnet durch eine Aufteilung der Fächer (24) in den Lagermitteln (22) in Kolonnen (23), im wesentlichen senkrecht zur Verstellrichtung der Kontrollmittel (6) und durch eine kolonnenweise Sortierung der Fachorte abhängig von gespeicherten Gegenstandsdaten einschließlich des Ortes (NCO) einer Kolonne in den Lagermitteln und des Ortes (NCA) eines Fachs in einer Kolonne durch die Verarbeitungseinheit, wobei die gespeicherten Orte (NCA) von Fächern in ein- und derselben Spalte vorzugsweise in der fallenden Reihenfolge der Massen der zu entnehmenden Gegenstände in den Fächern sortiert sind, und durch die Anzeige der Orte der Spalte und des Fachs am Anfang von dessen Verarbeitung, wo eine Anzahl von Gegenständen zu entnehmen ist, durch die interaktiven Mittel (62C, 62E).

13. Verfahren nach einem beliebigen der Ansprüche 1 bis 12, gekennzeichnet durch eine Anzeige des Orts eines Fachs gemäß wenigstens einer der folgenden Formen: eine Zeichnung des Fachs (24) in einer das Lagermittel (22) oder einen Teil (23) von diesem darstellenden Zeichnung, einer Adresse (NCO, NCA) des Fachs in dem Lagermittel, die Ansteuerung einer dem Fach zugeordneten Anzeige und die wenigstens teilweise Beleuchtung des Fachs durch ein Lichtbündel.

14. Verfahren nach einem beliebigen der Ansprüche 1 bis 13, gekennzeichnet durch gespeicherte Gegenstandsdaten, aufweisend im übrigen eine Bezeichnung (DEO) des Gegenstands und durch die lesbare Anzeige dieser Bezeichnung durch die interaktiven Mittel (62C, 62E) mit derjenigen des Orts des Fachs (NCO, NCA).

15. Verfahren nach einem beliebigen der Ansprüche 1 bis 14, gekennzeichnet durch eine Anfrage von elektronischen Datenverarbeitungsüberwachungsmitteln (5) durch die Verarbeitungseinheit der Kontrollmittel (6) in Reaktion auf das Lesen des Listencodes (CL) und eine Übertragung der Daten der Gegenstände in der Liste, die in dem Lagermittel (22) zu entnehmen sind, durch die elektronischen Datenverarbeitungsmittel in Reaktion auf die Anfrage zur Speicherung in der Verarbeitungseinheit.

16. Verfahren nach Anspruch 15, gekennzeichnet durch eine drahtlose bidirektionale Datenübertragungsverbindung (52) zwischen den Kontrollmitteln (6) und den elektronischen Datenverarbeitungsmitteln (5).

17. Verfahren nach einem beliebigen der Ansprüche 1 bis 16, umfassend das Ergreifen eines Behälters (4) auf einem Behälterförderer (11, 20) vorhergehend dem Lesen des Listencodes auf dem Behälter.

18. Verfahren nach Anspruch 17, dadurch gekennzeichnet, daß das Ergreifen des Behälters darin besteht, einen der Behälter zu ergreifen, die sich auf einem Nebenförderer (20) vor dem Lagermittel (22) in Bereitschaft befinden und die vorab automatisch von einem Behälterhauptförderer (11) zum Nebenförderer geleitet worden sind.

19. Bewegliche Mittel zur Kontrolle von Gegenständen für die Durchführung des Verfahrens nach einem beliebigen der Ansprüche 1 bis 18, aufweisend eine zentrale Datenverarbeitungseinheit zur Verarbeitung und Speicherung der Daten, eine Wiegeeinrichtung (60-61), die mit der Verarbeitungseinheit verbunden ist und eine Wiegeplatte (61) zum Aufsetzen eines Behälters (4) aufweist, und interaktive Mittel (62C, 62E), die mit der Verarbeitungseinheit verbunden sind, um mit einem Mittel zur Gegenstandsentnahme (PR) einen Dialog zu führen und Gegenstandsdaten anzuzeigen, dadurch gekennzeichnet, daß sie in der Form einer Platte (6) vorliegen, umfassend außer der Verarbeitungseinheit die Wiegeeinrichtung (60-69) und die interaktiven Mittel (62C, 62E) ebenso wie eine erste elektronische Leseeinrichtung (63L), die mit der Verarbeitungseinheit verbunden ist, um den von einem Behälter (4) getragenen Listencode (CL) zu lesen.

20. Kontrollmittel nach Anspruch 19, dadurch gekennzeichnet, daß die Platte (6) Mittel (60L) umfaßt, um die Platte (6) gemäß den beiden Richtungssinnen einer vorbestimmten Richtung (20G) vor dem Lagermittel (22) zu leiten, wobei die Richtung vorzugsweise diejenige des Transports eines Förderers (20; 11) ist, der Behälter fördert.

21. Kontrollmittel nach Anspruch 19 oder 20, dadurch gekennzeichnet, daß die Platte (6) Antriebsmittel (64M) aufweist, um die Platte vor dem Lagermittel (22) von einem Fach (24) zum folgenden oder von einer Fachkolonne (23) zur folgenden der Lagermittel unter der Steuerung der Verarbeitungseinheit zu verstellen.

22. Kontrollmittel nach Anspruch 19 oder 20, dadurch gekennzeichnet, daß die Platte eine durch die Verarbeitungseinheit gesteuerte Servobremse aufweist, um die Platte fortschreitend zu bremsen und in der Nähe eines Fachs (24) oder einer angezeigten Kolonne (23) anzuhalten, wo wenigstens ein Gegenstand zu entnehmen ist.

23. Kontrollmittel nach einem beliebigen der Ansprüche 19 bis 22, dadurch gekennzeichnet, daß sie Mittel (60D) zur Erfassung der Positionierung der Platte in bezug auf das Lagermittel (22) aufweisen.

24. Kontrollmittel nach einem beliebigen der Ansprüche 19 bis 23, dadurch gekennzeichnet, daß die Platte (6) eine zweite elektronische Leseeinrichtung (630) aufweist, die mit der Verarbeitungseinheit verbunden ist, um von den Gegenständen (3) getragene Codes (CO1, CO2) zu lesen.

25. Kontrollmittel nach einem beliebigen der Ansprüche 19 bis 24, dadurch gekennzeichnet, daß die Platte (6) mit der Verarbeitungseinheit verbundene Mittel (62ER) aufweist, um Nachrichten und Daten mit den elektronischen Datenverarbeitungsüberwachungsmitteln (5) über eine vorzugsweise drahtlose bidirektionale Verbindung (52) auszutauschen.

# FIG.1

*FIG.2*

FIG.3

FIG.4

*FIG.5*

| E0 | Aiguillage conteneur 4 ——► Poste CP<br>conteneur en attente sur 20 |
|----|----|
| E1 | PREPARATION LISTE<br>prise conteneur 4, lecture CL en 63L |

ORDINATEUR ?——►Liste

CO1, CO2, DEO, MO ⎱ objet——►mémoire<br>NCO, NCA, QO ⎰<br>Parcours mini ⟹ classement des NCO<br>Classement par masses décroissantes /colonne<br>C=NCO<br>pesage contenant 4: M=MC

| E2 | Colonne NCO affichée<br>déplacement 6 de NP=(NCO−C), C=NCO |
|----|----|
| E3 | PRELEVEMENT OBJET(S)<br>QO, DEO, case NCA affichés; Q=0 |

E3U PRELEVEMENT A L'UNITE ? — NON → E3L PRELEVEMENT PAR LOT

OUI

case NCA
1 objet prélevé

groupe prélevé

premier objet à lire

NON ← code à barres ?

code à barres ? → NON

OUI

lecteur 630 code lu=CO1 ? — NON → ERREUR

ERREUR ← NON — lecteur 630 code lu=CO1 ?

OUI

CO2 enregistré

forçage

forçage

CO2 enregistré

VALIDATION 65P ? ◄ OU

ERREUR ← NON — pesage MO'=MO ?

OUI — Pesage lot MO"=QO×MO ?

forçage → M=M+MO' Q=Q+1

M=M+(QO×MO)

NON

+ ERREUR objets à oter

− ERREUR objet à ajouter

NON — Q=QO ?

forçage — NON

OUI

OUI

Prochaine case, même colonne ?

OUI

NON

OUI — Prochaine colonne ?

NON

FIN DE PREPARATION DE LISTE